# EUROPEAN PATENT SPECIFICATION

(11) **EP 3 801 147 B1**
(45) Date of publication and mention of the grant of the patent: **05.07.2023**
(21) Application number: 19854663.2
(22) Date of filing: 08.05.2019
(51) Int. Cl.: A47J 31/18, A47J 31/44

(54) **A COFFEE MACHINE**
KAFFEEMASCHINE
MACHINE À CAFÉ

(30) Priority: 05.06.2018 TR 201807931
(43) Date of publication of application: 14.04.2021
(73) Proprietor: Arçelik Anonim Sirketi, 34445 Istanbul (TR)
(72) Inventor: KARAAGAC, Emre, 34445 Beyoglu/Istanbul (TR); AYAROGLU, Emre, 34445 Beyoglu/Istanbul (TR); ALPTEKIN, Ahmet, 34445 Beyoglu/Istanbul (TR); KUYUMCU, Arda, 34445 Beyoglu/Istanbul (TR); COKER, Nazli Ecem, 34445 Beyoglu/Istanbul (TR)
(86) International application number: PCT/TR2019/050306
(87) International publication number: WO 2020/046232

(56) References cited:
- WO-A1-83/00548
- WO-A1-2014/030127
- WO-A1-2017/192765
- WO-A2-2004/069013
- DE-U1-202009 011 966
- FR-A1- 2 508 784

## Description

The present invention relates to a coffee machine comprising cooking containers used in cooking Turkish coffee.

In coffee machines, particularly in Turkish coffee machines, a cooking container in which coffee-water mixture is prepared, is placed in a cooking slot. The cooking process is performed by heating the cooking container by means of a heater disposed on the base of the cooking slot. The aligning of the cooking container with the heater is realized by placing the cooking container in the cooking slot so as to almost firm fittingly settle therein, or by the formations disposed below the cooking container engaging on the projections provided above the heater. In coffee machine without a cooking slot, alignment of the cooking container with the heater is left to the users who have to control each time whether the cooking container completely overlaps the heater. If alignment fails to be performed in full, the heater is unable to transmit sufficient heat to the cooking container, causing the coffee to be cooked inadequately. In addition, coffee may be overcooked at the portions where there is partial contact with the heater. Imperfect alignment of the cooking container also causes the sensor enabling detecting coffee level in the cooking container, to read erroneous measurements. Furthermore, in coffee machines without a cooking slot, problems may be experienced such as a cooking container being knocked over due to a likely user impact. State of the art international patent application no. WO2008052946 discloses a coffee machine having a cooking slot in which a cooking container is placed.

State of the art United States patent application no. US2016287007 discloses a coffee machine enabling a movable control head group to be maintained in a fixed position by means of a magnet.

State of the art international patent applications no. WO8300548 or WO2017/192765A1 disclose a coffee machine enabling alignment of a cooking container by means of a magnet provided on a resting surface on which the cooking container is placed.

State of the art international patent application no. WO0209562 discloses a coffee machine detecting orientation of a cooking container by means of two magnets.

The aim of the present invention is to realize a coffee machine in which a cooking container is aligned independently of the user, employing the heater with maximum efficiency in each cooking process.

The coffee machine realized to achieve the aim of the present invention and disclosed in the first claim and the dependent claims, comprises a magnetic member provided in a body, enabling a cooking container made of ferromagnetic material to be aligned by attracting it by means of magnetic force. In the cooking process, the cooking container is placed on a resting surface. When a user is placing the cooking container towards the resting surface, the magnetic member pulls the cooking container by means of magnetic force, enabling the cooking container to completely align with the resting surface. The cooking container is thus aligned independently of the user and is protected by magnetic force from being knocked over.

In another embodiment of the invention, the magnetic member is positioned so as to engage the cooking container from its upper half portion. This enables maximizing the moment force applied by the magnetic member to the pivoting axis located in the vicinity of the cooking container, preventing the cooking container from being knocked over due to impacts.

In another embodiment of the invention, the magnetic member is placed in a compartment extending outwards from the body surface. By this, the side surface of the cooking container is enabled not to contact the body fully along a direction, avoiding heating of the body which is preferably plastic, and preventing the cooking container from making a high impact sound by impacting the body due to being pulled by the magnetic member. In another version of this embodiment, the compartment is provided on a ceiling partially covering the cooking container. The compartment extends downwards from the ceiling so as to face a portion of the side surface of the cooking container, and the magnetic member is positioned in the compartment so as to correspond to the side surface of the cooking container.

In another embodiment of the invention, the cooking container has a cylindrical side surface and the compartment has a front portion curved so as to grip a portion of the side surface. The curved front portion enables the cooking container to be guided regardless of its approaching angle to the resting surface, and the cooking container is pulled by the magnetic member so as to completely overlap with the resting surface. The necessity of a user to place the cooking container to the coffee machine only in a single direction is thus eliminated.

In another embodiment of the invention, projections are provided on the compartment, inhibiting the cooking container from completely contacting the compartment. When the cooking container contacts the compartment by being pulled by the magnetic member, the base of the cooking container is slightly raised by the effect of magnetic force, creating a small gap in between the resting surface and the cooking container base, in other terms, since the cooking container is completely made of ferromagnetic material, the magnetic force formed between the magnetic member and the cooking container tends to adjust the direction of the cooking container so as to pass through the cooking container's center of gravity, and the portion of the cooking container proximate to the magnetic member thus tends to advance upwards along the compartment. In this case, the cooking process fails to be performed with maximum efficiency, reducing the quality of a coffee cooked in such a state. The projections interrupt the contact between the cooking container and the compartment, inhibiting the front portion of the cooking container from elevating due to magnetic forces. The projections also prevent the cooking container heated during the cooking process, from heating the compartment. In another version of this embodiment, the projections are disposed on the lower edge of the curved front portion. This enables the cooking compartment to be pivoted while being removed. In another version of this embodiment, two projections are provided so as to be disposed on the lower edge corners of the curved front portion. In this embodiment, the projections may be sized large enough to inhibit elevation of the front portion of the cooking container and also small enough to provide thermal insulation. In other terms, the projections are enabled to perform the above disclosed functions in the best manner.

In another embodiment of the invention, the coffee machine utilizes an induction type heater, and the magnitude of the magnetic member's attraction force is determined such that the magnetic member pulls the cooking container once the induction coil detects the cooking container while it is being placed on the resting surface. The position in which the induction coil first detects the cooking container roughly corresponds to the position in which the cooking container covers half of the resting surface.

In the coffee machine of the invention, alignment of the cooking container is enabled by the magnetic member and independently of the user, improving convenience of use. The cooking container is enabled to completely settle on the resting surface, preventing partial contact with the heater and thereby actively utilizing entire power of the heater, avoiding reduction of the cooking efficiency.

The cooking container realized to achieve the aims of the present invention is illustrated in the accompanying drawings, wherein:

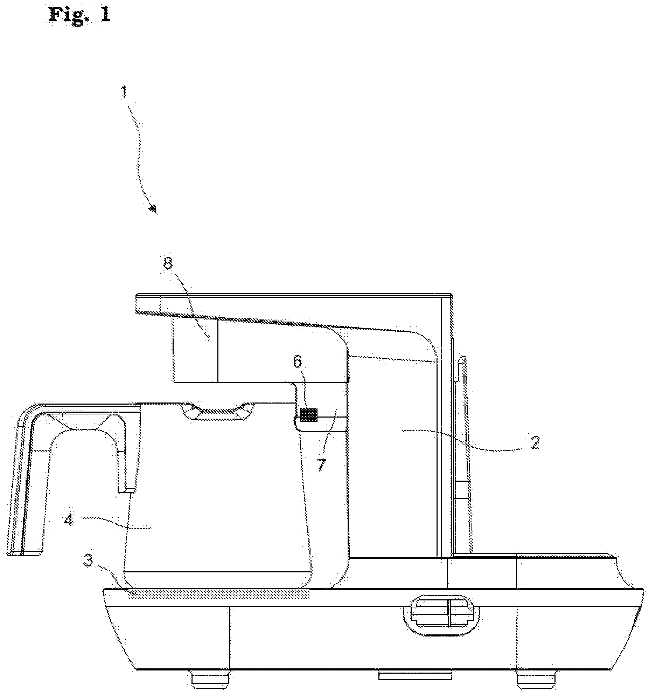

Figure 1 is a schematic side view of a coffee machine.

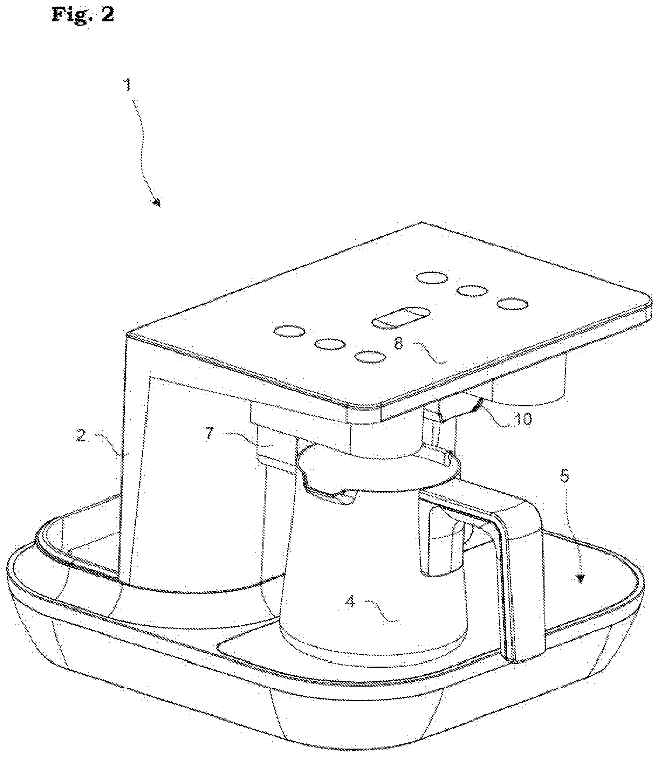

Figure 2 is a perspective view of a coffee machine.

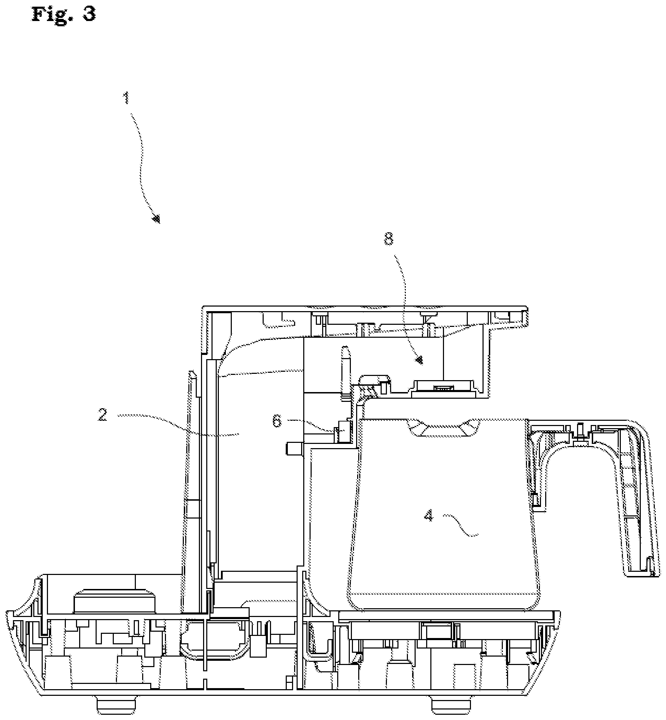

Figure 3 is a side sectional view of the coffee machine of the invention.

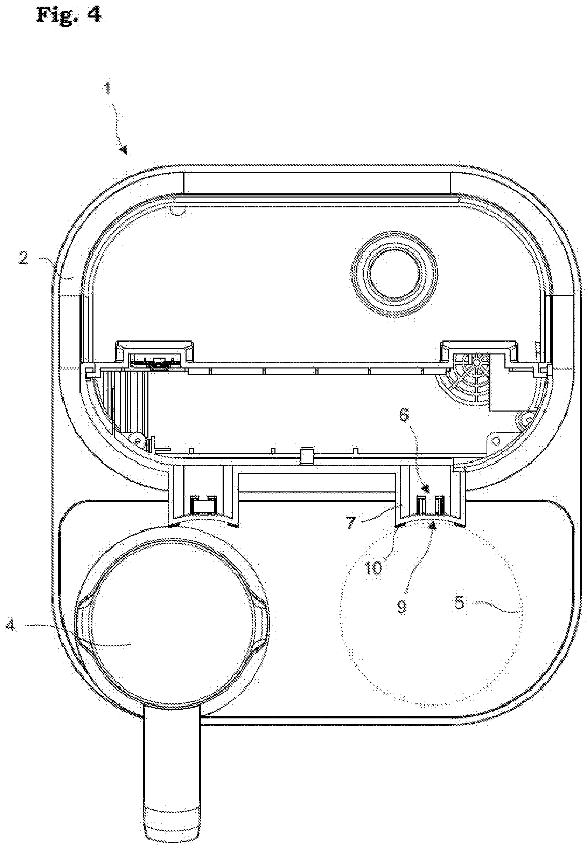

Figure 4 is a schematic view of the coffee machine in an embodiment of the invention, from above.

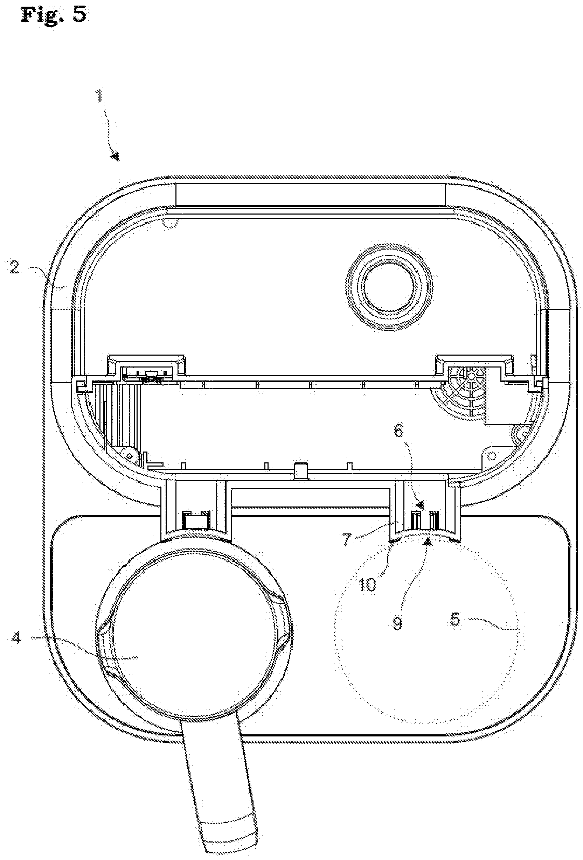

Figure 5 is another schematic view of the coffee machine in an embodiment of the invention, from above.

The elements in the figures are numbered individually and the correspondence of these numbers are given hereinafter.
1. Coffee machine
2. Body
3. Heater
4. Cooking container
5. Resting surface
6. Magnetic member
7. Compartment
8. Ceiling
9. Curved front portion
10. Projection

The coffee machine (1) comprises a body (2), a heater (3) provided in the body (2), realizing the cooking process, a cooking container (4) in which the cooking process is performed, made of ferromagnetic material, and a resting surface (5) provided on the heater (3), on which the cooking container (4) is placed. After being filled with materials such as coffee, water and sugar, the cooking container (4) is placed on the resting surface (5) and the coffee-water mixture therein is cooked by heating the cooking container (4) by means of the heater (3) disposed preferably below the resting surface (5). The cooking container (4) being made of ferromagnetic material improves the quality perception of the coffee machine (1).

The coffee machine (1) of the invention comprises at least one magnetic member (6) provided on the body (2), enabling alignment of the cooking container (4) with the resting surface (5) by pulling the cooking container (4). The magnetic member (6) provided on the body (2) pulls the cooking container (4), enabling the cooking container (4) to be aligned with the resting surface (5) and eliminating the user concerns regarding whether the cooking container (4) has fitted properly in place. In addition, the magnetic member (6) pulls the cooking container (4) by magnetic force during the cooking process and helps protecting the cooking container (4) from being knocked over or from being displaced from the resting surface (5) during the cooking process, averting likely accidents.

According to the invention, the magnetic member (6) is positioned so as to correspond to the upper half of the cooking container (4) when the cooking container (4) is placed on the resting surface (5). The magnetic member (6) holds the cooking container (4) from its upper half portion, thereby maximizing the magnitude of the moment forces applied to the cooking container (4) by the magnetic member (6). The cooking container (4) is thus enabled not to be knocked over due to a likely user impact.

In another embodiment of the invention, the coffee machine (1) comprises a compartment (7) provided on the body (2), extending outwards from the surface where it is disposed, in which the magnetic member (6) is placed. The magnetic member (6) is concealed inside the compartment (7), avoiding displacement thereof from the body (2) together with the cooking container (4) when the cooking container (4) is being removed. The compartment (7) extends from the body (2) so as to project towards the cooking container (4) and contacts the cooking container (4) when the cooking container (4) is placed on the resting surface (5). This embodiment further enables the coffee machine (1) to have a more aesthetically pleasing appearance.

In another embodiment of the invention, the coffee machine (1) comprises a ceiling (8) provided on the body (2), partially covering the cooking container (4) when the cooking container (4) is placed on the resting surface (5), and the compartment (7) extends downwards from the ceiling (8). The nozzle group (not shown in the figures) supplying water to the cooking container (4) is preferably disposed in the ceiling (8). The partial covering of the cooking container (4) by the ceiling (8) may be enabled by the presence of a gap in between the ceiling (8) and the cooking container (4), or by the ceiling (8) covering a portion of the cooking container (4). In both cases, the user is enabled to conveniently see inside the cooking container (4) and to monitor cooking state of coffee.

In another embodiment of the invention, the cooking container (4) has a cylindrical side surface, and the compartment (7) has a curved front portion (9) almost matching the side surface of the cooking container (4) when the cooking container (4) is placed on the resting surface (5). The cooking container (4) comprises a cylindrical side surface like the traditional Turkish coffee cooking pots. The curved front portion (9) partially surrounds the side surface of the cooking container (4), assisting in preventing the cooking container (4) from being knocked over. The cooking container (4) is inhibited from being knocked over during the cooking process by means of the magnetic member (6) and the curved front portion (9). The curved front portion (9) covers an arc of at least 20° of the cooking container (4) side surface. When a user attempts to place the cooking container (4) on the resting surface (5) in a position offset from the attraction direction of the magnetic member (6), the curved front portion (9) guides the cooking container (4), enabling the cooking container (4) to pivot about itself and to be pulled by the magnetic member (6) so as to be aligned with the resting surface (5).

In another embodiment of the invention, the coffee machine (1) comprises at least one projection (10) provided on the curved front portion (9), extending outwards and thereby inhibiting contact of the cooking container (4) with the compartment (7). For an efficient cooking process, the cooking container (4) and the resting surface (5) should be completely parallel to each other, in other terms, they should completely overlap. The side of the cooking container (4) facing the compartment (7) elevates due to magnetic forces generated when the magnetic member (6) pulls the cooking container (4), disturbing its parallel arrangement with the resting surface (5). The projections (10) prevent the side of the cooking container (4) facing the compartment (7) from elevating and from compromising the efficiency of the cooking process. The projections (10) also act as a thermal barrier between the compartment (7) and the cooking container (4) heated during the cooking process, preventing the compartment (7) which is preferably made of plastic material, from being damaged due to high temperatures. Another function of the projections (10) is reducing the impact sound generated when the cooking container (4) impacts the curved front portion (9) during the magnetic member (6) pulling the cooking container (4) towards the compartment (7) in order to align it.

In another embodiment of the invention, the projections (10) are disposed on the lower edge of the curved front portion (9). When the cooking process is completed or the user wishes to remove the cooking container (4) from the resting surface (5), for the user to conveniently overcome the magnetic force applied on the cooking container (4) by the magnetic member (6), the projections (10) are positioned on the lower edge of the curved front portion (9) so as to be farther from the center of gravity of the cooking container (4). It is thus enabled to easily remove the cooking container (4) and to rotate thereof preferably by pivoting motion.

In another embodiment of the invention, two projections (10) are provided, positioned on the lower edge corners of the curved front portion (9). In order to intensify the above disclosed functions of the projections (10), i.e. to enhance the functions of damping impact sounds, allowing pivotal motion of the cooking container (4), providing thermal insulation, and preventing the side of the cooking container (4) facing the compartment (7) from elevating due to magnetic force, and additionally to avoid the cooking container (4) being knocked over during the cooking process, two projections (10) are provided, so as to be positioned on the lower edge corners of the curved front portion (9).

In another embodiment of the invention, the heater (3) is of induction type structure and the magnetic member (6) has a magnetic force strong enough to pull the cooking container (4) when at least half of the cooking container (4) overlaps the resting surface (5). The cooking container (4) is pulled towards the compartment (7) when it enters the magnetic field generated by the magnetic member (6). The attraction force magnitude of the magnetic member (6) is determined such that the magnetic member (6) can pull the cooking container (4) towards the compartment (7) once the induction heater (3) detects at least half of the cooking container (4), in other terms once the cooking container (4) covers roughly at least half of the resting surface (5). Thus, when the cooking container (4) is placed so as not to enter into the attraction field of the magnetic member (6), the cooking container (4) does not draw power from the induction coil (not shown in figures) and the coffee machine (1) alerts the user by signaling misplacement of the cooking container (4). When the cooking container (4) enters the attraction field of the magnetic member (6), it is aligned with the resting surface (5) by being pulled towards the compartment (7) and draws maximum power from the induction coil, realizing an efficient cooking process. This embodiment also eliminates the necessity to use mechanical sensors enabling detecting whether the cooking container (4) is placed properly.

The present invention facilitates alignment of the cooking container (4), improving quality perception on the user. Furthermore, the cooking container (4) is enabled to be firmly held by the magnetic member (6), protecting the cooking container (4) from being knocked over during the cooking process and preventing likely accidents.

## Claims

1. A coffee machine (1) **comprising** a body (2), a heater (3) provided in the body (2), realizing the cooking process, a cooking container (4) in which the cooking process is performed, made of ferromagnetic material, and a resting surface (5) provided on the heater (3), on which the cooking container (4) is placed, **characterized by** at least one magnetic member (6) provided on the body (2), enabling the cooking container (4) to be aligned with the resting surface (5) by attracting the cooking container (4) wherein the magnetic member (6) positioned so as to correspond to the upper half of the cooking container (4) when the cooking container (4) is placed on the resting surface (5).

2. A coffee machine (1) according to claim 1, **characterized by** a compartment (7) provided on the body (2), extending outwards from the surface where it is disposed, in which the magnetic member (6) is placed.

3. A coffee machine (1) according to claim 2, **characterized by** a ceiling (8) provided on the body (2), partially covering the cooking container (4) when the cooking container (4) is placed on the resting surface (5), **and by** the compartment (7) extending downwards from the ceiling (8).

4. A coffee machine (1) according to claim 2 or 3, **characterized by** the cooking container (4) having a cylindrical side surface, **and by** the compartment (7) having a curved front portion (9) almost matching the side surface of the cooking container (4) when the cooking container (4) is placed on the resting surface (5).

5. A coffee machine (1) according to claim 4, **characterized by** at least one projection (10) provided on the curved front portion (9), extending outwards and thereby inhibiting contact of the cooking container (4) with the compartment (7).

6. A coffee machine (1) according to claim 5, **characterized by** the projection (10) provided on the lower edge of the curved front portion (9).

7. A coffee machine (1) according to claim 5 or 6, **characterized by** two projections (10) provided on the lower edge corners of the curved front portion (9).

8. A coffee machine (1) according to any one of the preceding claims, **characterized by** the induction type heater (3) **and by** the magnetic member (6) having a magnetic force strong enough to pull the cooking container (4) when at least half of the cooking container (4) overlaps the resting surface (5).

## Patentansprüche

1. Eine Kaffeemaschine (1) **umfasst** einen Körper (2), eine im Körper (2) vorgesehene Heizeinrichtung (3), die den Garvorgang durchführt, einen Kochbehälter (4) aus ferromagnetischem Material, in dem der Garvorgang durchgeführt wird, und eine an der Heizeinrichtung (3) vorgesehene Abstellfläche (5), auf der der Kochbehälter (4) abgestellt wird, **gekennzeichnet ist sie dadurch,** dass am Körper (2) mindestens ein magnetisches Element (6) vorgesehen ist, das eine Ausrichtung des Kochbehälters (4) mit der Auflagefläche (5) ermöglicht, indem es den Kochbehälter (4) anzieht, wobei das Magnetelement (6) so positioniert ist, dass es der oberen Hälfte des Kochbehälter (4) entspricht, wenn der Kochbehälter (4) auf der Abstellfläche (5) platziert ist.

2. Eine Kaffeemaschine (1), wie in Anspruch 1 aufgeführt, **ist dadurch gekennzeichnet, dass** am Körper (2) ein Fach (7) vorgesehen ist, das sich von der Oberfläche, auf der es angeordnet ist, nach außen erstreckt und in dem das magnetische Element (6) platziert ist.

3. Eine Kaffeemaschine (1), wie in Anspruch 2 aufgeführt, **ist dadurch gekennzeichnet, dass** eine am Körper (2) vorgesehene Decke (8) den Kochbehälter (4) teilweise abdeckt, wenn der Kochbehälter (4) auf der Abstellfläche (5) abgestellt ist, und dass sich das Fach (7) von der Decke (8) nach unten erstreckt.

4. Eine Kaffeemaschine (1), wie in Anspruch 2 oder 3 aufgeführt, **ist dadurch gekennzeichnet, dass** der Kochbehälter (4) eine zylindrische Seitenfläche aufweist und dass das Fach (7) einen gebogenen Vorderabschnitt (9) aufweist, der nahezu mit der Seitenfläche des Kochbehälters (4) übereinstimmt, wenn der Kochbehälter (4) auf die Abstellfläche (5) gestellt wird.

5. Eine Kaffeemaschine (1), wie in Anspruch 4 aufgeführt, **ist dadurch gekennzeichnet, dass** am gebogenen Vorderteil (9) mindestens ein Vorsprung (10) vorgesehen ist, der sich nach außen erstreckt und dadurch einen Kontakt des Kochbehälters (4) mit dem Fach (7) verhindert.

6. Eine Kaffeemaschine (1), wie in Anspruch 5 aufgeführt, **ist dadurch gekennzeichnet, dass** der Vorsprung (10) am unteren Rand des gebogenen Vorderabschnitts (9) vorgesehen ist.

7. Eine Kaffeemaschine (1), wie in Anspruch 5 oder 6 aufgeführt, **ist dadurch gekennzeichnet, dass** zwei Vorsprünge (10) an den unteren Kantenecken des gebogenen Vorderabschnitts (9) vorgesehen sind.

8. Eine Kaffeemaschine (1), wie in einem der vorherigen Ansprüchen aufgeführt, **ist dadurch gekennzeichnet, dass** die Heizeinrichtung (3) und das Magnetelement (6) eine Magnetkraft haben, die stark genug ist, um den Kochbehälter (4) zu ziehen, wenn mindestens die Hälfte des Kochbehälters (4) die Abstellfläche (5) überlappt.

## Revendications

1. Une machine à café (1) **comprenant** un corps (2), un élément chauffant (3) placé dans le corps (2), réalisant le processus de cuisson, un récipient de cuisson (4) dans lequel le processus de cuisson est réalisé, fait d'un matériau ferromagnétique, et une surface de repos (5) placée sur l'élément chauffant (3), sur laquelle le récipient de cuisson (4) est placé, **caractérisé par** au moins un élément magnétique (6) placé sur le corps (2), permettant au récipient de cuisson (4) d'être aligné avec la surface de repos (5) en attirant le récipient de cuisson (4) dans lequel l'élément magnétique (6) est positionné de manière à correspondre à la moitié supérieure du récipient de cuisson (4) lorsque le récipient de cuisson (4) est placé sur la surface de repos (5).

2. Une machine à café (1) selon la déclaration 1, **caractérisée par** un compartiment (7) prévu sur le corps (2), s'étendant vers l'extérieur de la surface où il est disposé, dans lequel est placé l'élément magnétique (6).

3. Une machine à café (1) selon la déclaration 2, **caractérisée par** un plafond (8) prévu sur le corps (2), recouvrant partiellement le récipient de cuisson (4) lorsque le récipient de cuisson (4) est placé sur la surface de repos (5), **et par** le compartiment (7) s'étendant vers le bas à partir du plafond (8).

4. Une machine à café (1) selon la déclaration 2 ou 3, **caractérisée par le fait que** le récipient de cuisson (4) a une surface latérale cylindrique, **et par le fait que** le compartiment (7) a une partie avant courbée (9) correspondant presque à la surface latérale du récipient de cuisson (4) lorsque le récipient de cuisson (4) est placé sur la surface de repos (5).

5. Une machine à café (1) selon la déclaration 4, **caractérisée par** au moins une saillie (10) prévue sur la partie avant incurvée (9), s'étendant vers l'extérieur et empêchant ainsi le contact du récipient de cuisson (4) avec le compartiment (7).

6. Une machine à café (1) selon la déclaration 5, **caractérisée par** la saillie (10) prévue sur le bord inférieur de la partie frontale incurvée (9).

7. Une machine à café (1) selon la déclaration 5 ou 6, **caractérisée par** deux saillies (10) prévues sur les coins du bord inférieur de la partie avant incurvée (9).

8. Une machine à café (1) selon l'une quelconque des déclarations précédentes, **caractérisée par** le chauffage de type à induction (3) **et par** l'élément magnétique (6) ayant une force magnétique suffisamment forte pour tirer le récipient de cuisson (4) lorsqu'au moins la moitié du récipient de cuisson (4) chevauche la surface de repos (5).
